# EUROPEAN PATENT APPLICATION

(11) **EP 0 952 066 A2**
(43) Date of publication of application: **27.10.1999**
(21) Application number: 99303080.8
(22) Date of filing: 21.04.1999
(51) Int. Cl.: B62B 5/00

(54) **Wheel arrangement for a trolley or appliance**

(30) Priority: 21.04.1998 GB 9808457
(71) Applicant: NUMATIC INTERNATIONAL LIMITED, Camberley, Surrey GU15 3SY (GB)
(72) Inventor: Duncan, Christopher Robert, Numatic Inter. Ltd., Somerset, TA20 2BB (GB); Gailes, Michael Edward, Numatic International Ltd., Somerset, TA20 2BB (GB)
(74) Representative: Brown, Fraser Gregory James

(57) **Abstract**

According to the present invention there is provided a trolley or appliance provided with wheeled support means, which wheeled support means comprises two sets of wheels or rollers, a first set (130,131) of which is selected and configured to support the trolley or appliance during a task associated with the trolley or appliance and a second set (107) of which is selected and configured to support the trolley during transit between tasks, wherein the first and second sets of wheels or rollers are arranged one with respect to the other in such a way that the load of the trolley or appliance may be transferred from the first set to the second set by tipping of the trolley or appliance.

## Description

This invention relates to the support of trolleys or appliances during use or transit between usage. In particular this invention relates to wheeled supports for trolleys or appliances which need to be moved small distances when in use and longer distances when in transit between working tasks for which the trolley or appliance is used.

Known trolleys or appliances are typically supported by small wheels or rollers carried on an underside of the trolley or appliance. The rollers or wheels are limited in size in order to make the trolley or appliance stable and compact. Usually at least some of the wheels or rollers comprise castors which permit easy manoeuvring of the trolley or appliance around the immediate locale. A problem with these wheels or rollers is that they tend to be unsuitable or difficult to control when moving the trolley or appliance over long distances or uneven surfaces. This problem may be addressed by increasing the size of the rollers or wheels, but the trolley may then be rendered less compact and potentially unstable.

It is an object of the present invention to provide wheeled support means for a trolley or appliance which render the trolley or appliance conveniently movable when in working use and when in transit.

According to the present invention there is provided a trolley or appliance provided with wheeled support means, which wheeled support means comprises two sets of wheels or rollers, a first set of which is selected and configured to support the trolley or appliance during a task associated with the trolley or appliance and a second set of which is selected and configured to support the trolley during transit between tasks, wherein the first and second sets of wheels or rollers are arranged one with respect to the other in such a way that the load of the trolley or appliance may be transferred from the first set to the second set by tipping of the trolley or appliance.

In most embodiments, when the first set of wheels or rollers is in contact with a surface upon which the trolley or appliance is supported, the second set of wheels or rollers is spaced apart from the surface. Conversely, when the second set or wheels or rollers is in contact with the surface the first set is wholly or partially spaced apart from the surface.

In a particular aspect of the invention, the first set of wheels or rollers is capable of stably supporting the trolley or appliance unaided, whereas the second set of wheels or rollers share the load of the trolley or appliance in conjunction with a handle which a user grasps during transport.

The first set of wheels or rollers may comprise one or more castors and preferably the first set of wheels or rollers consists of castors. In one preferred embodiment, the first set of wheels consists of four spaced apart castors. The first set is preferably located on an underside of the trolley or appliance.

The second set of wheels may comprise two spaced apart co-axially constrained wheels. In particular, the second set of wheels may consist of two spaced apart wheels mounted for rotation on an axle. The second set or wheels is preferably located on a lower side region of the trolley or appliance. The wheels of the second set are preferably larger than the wheels or rollers of the first set. The larger wheels are generally better suited to transit between tasks and better able to negotiate a variety of surfaces and small steps or bumps.

The trolley or appliance may comprise a chassis suitable for carrying articles. In one embodiment the chassis is suitable for carrying one or more mop buckets and ancillary cleaning aids or products. In this case the task comprises floor mopping.

The appliance may comprise a vacuum cleaner or a floor scrubber or a combination of the two. In these cases the task comprises floor vacuum cleaning or scrubbing.

The trolley or appliance may comprise an L-shaped chassis structure comprising a base portion and an upright portion. Preferably, the base portion is adapted to carry a load and the upright portion comprises the handle with which the user may support the trolley or appliance during transit.

In an embodiment the load comprises a bucket and the upright portion is adapted to support a mop wringer.

The first set of wheels is preferably provided on the base portion. The second set of wheels may be provided on or adjacent an elbow portion of the chassis, which elbow portion connects the base portion and the upright portion.

In a particular embodiment of the invention the trolley may be tipped by rotation of the upright portion towards the surface, and consequent lifting of the base portion from the surface.

In a preferred arrangement the trolley or appliance is tipped by an angle of about 5³ or more to transfer the load from the first set of wheels or rollers to the second set.

Following is a description by way of example only and with reference to the drawings of methods of putting the present invention into effect.

In the drawings:-

Figure 1 is a side view, partially in section, of a trolley according to the present invention.

Figures 2 and 3 are side views of the trolley of figure 1, which views demonstrate the mode of operation.

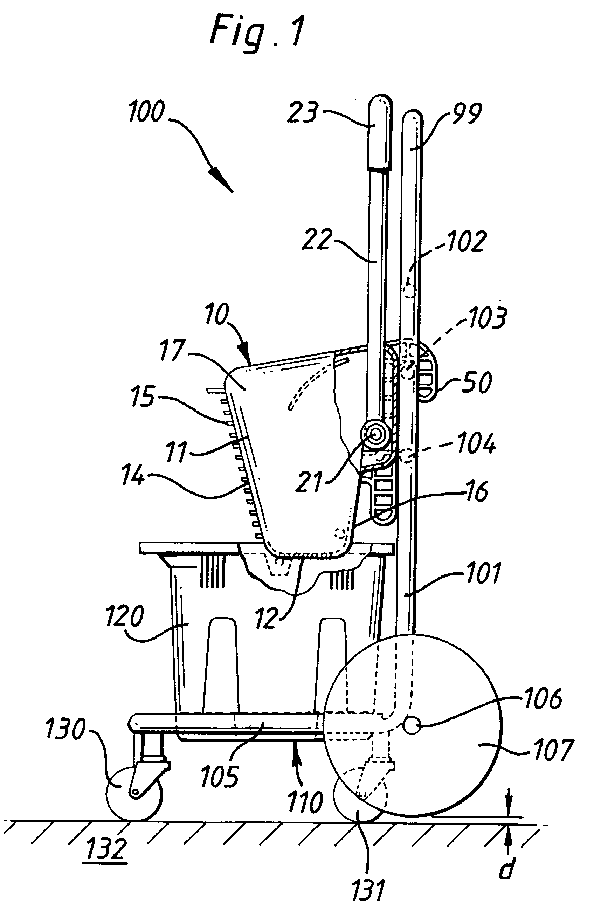

A mopping trolley according to the present invention is indicated as 100 in figure 1. The trolley comprises two L-shaped tubular steel frame members (one visible as 101). The two frame members are laterally spaced apart one from the other by three vertically spaced apart transverse metal tubular members 102,103 and 104. The transverse members are welded to the frame members to from a ladder like structure between the upright portions of the L of the frames. An upper end portion 99 of each upright portion forms a handle at about the waist height of the user of the trolley.

The horizontal base portion 105 of the frames is provided at the elbow of the L-shape with an axle 106. The axle carries at outside ends thereof two wheels (one visible as 107). The base portion is also provided with four castors (two visible as 130,131. The castors are attached to the base portion at respective front and rear corner portions of the base portion. The castors are positioned so that they support the trolley when the base portion is substantially horizontal with a floor surface 132 upon which the trolley rests. In this configuration the wheels 107 are spaced apart from the floor surface by a distance d, as shown in figure 1.

Between the two base portions of the L-shape frames a base plate 110 is provided. The base plate locates and accommodates the lower end of a removable bucket 120. The bucket shown is a standard prior art square-type bucket.

Above the bucket, a mop press 10 is shown hung from the transverse member 103 by means or two spaced apart hook members 50 (one visible). The press comprises a moulded plastics material housing 11. The housing comprises a base portion 12 provided with a plurality of drain holes. Upstanding and tapering outwards from a front end of the base portion is a front wall 14. The front wall is provided with a plurality of drain holes (not shown in the figures) and a plurality of horizontal ridge members 15 which stiffen and strengthen the wall structure.

Upstanding and tapering outwardly from a rear end of the base portion is a rear wall 16. The housing is completed by upstanding side walls 17 (one only visible in the figure). An axle 21 is mounted for rotation next to an outside surface of the rear wall 16. Attached to the axle is a lever 22 which is provided at a distal end thereof with a handle 23. A pressing mechanism (not shown but which may be of a type common in the art) responds to movement of the lever and axle in order to push a pressing member against a mop head entered into the mop press.

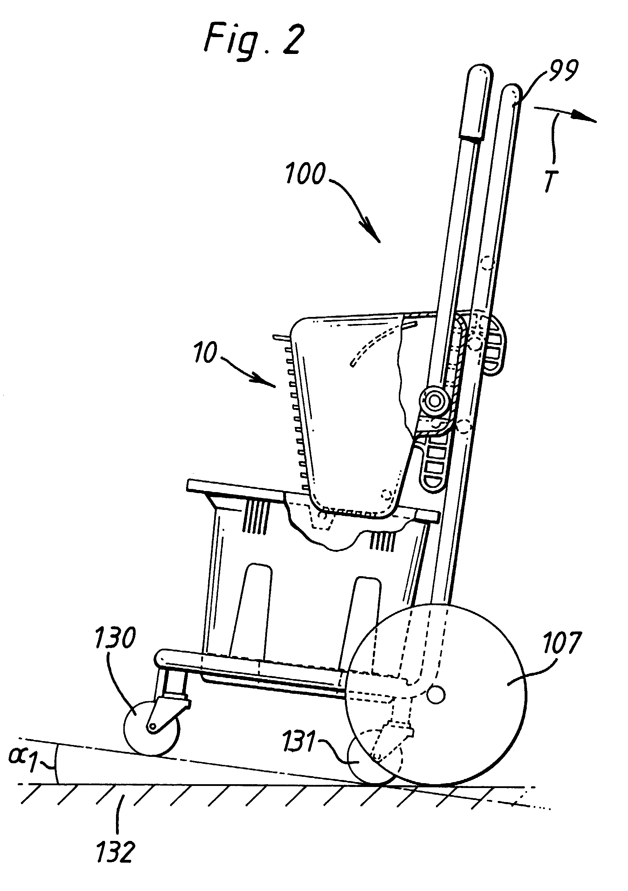

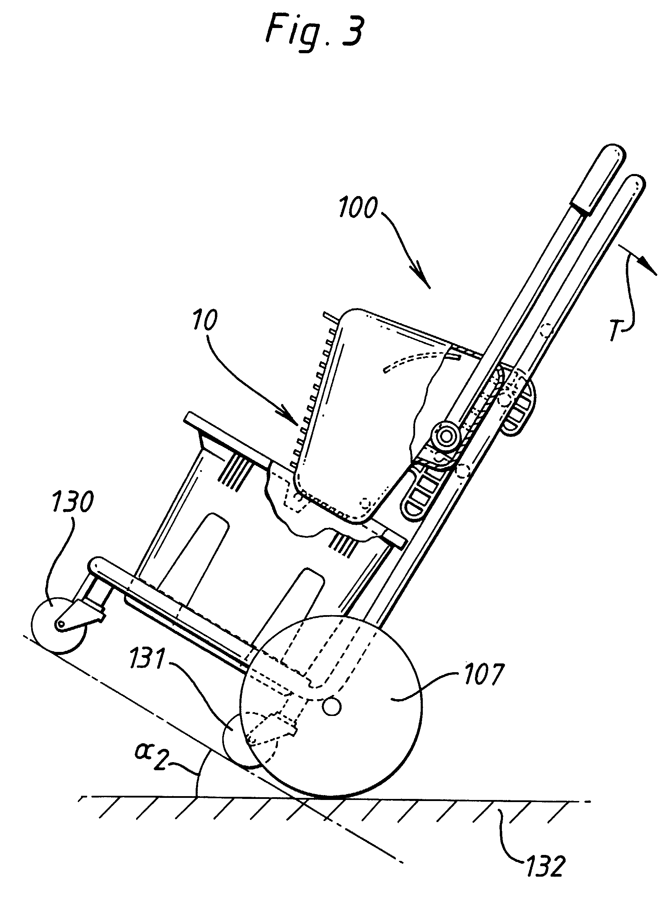

The mode of operation of the trolley is demonstrated by figure 2 and three. In Figure 2 the trolley 100 is shown tipped backwards by a user in the direction T. As the trolley is tipped by an angle α₁, about 5³, the front castors 130 leave the ground 132 and the wheels 107 contact the ground. As the wheels contact the ground load is transferred from the castors to the wheels and balanced by the user holding the handle 99. Further tipping of the trolley beyond 5³ (as indicated by α₂) causes the rear castors 131 to lift from the ground so that the entire weight of the trolley is shared between the handle 99 and the wheels 107, as shown in figure 3.

In this latter configuration the trolley may be conveniently moved between tasks and over a variety of surfaces. Once the trolley is in a location where mopping is to be carried out it can be returned to the vertical, as shown in figure 1, and rests on the castors. When supported by the castors it may easily be moved forwards, backwards and from side to side as required during mopping.

## Claims

1. A trolley or appliance provided with wheeled support means, which wheeled support means comprises two sets of wheels or rollers, a first set of which is selected and configured to support the trolley or appliance during a task associated with the trolley or appliance and a second set of which is selected and configured to support the trolley during transit between tasks, wherein the first and second sets of wheels or rollers are arranged one with respect to the other in such a way that the load of the trolley or appliance may be transferred from the first set to the second set by tipping of the trolley or appliance.

2. A trolley or appliance as claimed in claim 1 and arranged such that when the first set of wheels or rollers is in contact with a surface upon which the trolley or appliance is supported, the second set of wheels or rollers is spaced apart from the surface.

3. A trolley or appliance as claimed in claim 1 or claim 2 and arranged such that when the second set or wheels or rollers is in contact with the surface the first set is wholly or partially spaced apart from the surface.

4. A trolley or appliance as claimed in any preceding claim wherein the first set of wheels or rollers is capable of stably supporting the trolley or appliance unaided, whereas the second set of wheels or rollers share the load of the trolley or appliance in conjunction with a handle which a user grasps during transport.

5. A trolley or appliance as claimed in any preceding claim wherein the first set of wheels or rollers comprises one or more castors.

6. A trolley as claimed in any preceding claim wherein the first set of wheels or rollers consists of castors.

7. A trolley as claimed in any preceding claim wherein the first set of wheels consists of four spaced apart castors.

8. A trolley or appliance as claimed in any preceding claim wherein the second set of wheels comprises two spaced apart co-axially constrained wheels.

9. A trolley as claimed in any preceding claim wherein the second set or wheels is preferably located on a lower side region of the trolley or appliance and the first set is located adjacent an underside of the trolley or appliance.

10. A trolley or appliance as claimed in any preceding claim wherein the wheels of the second set are larger than the wheels or rollers of the first set.

11. A trolley as claimed in any preceding claim and comprising a chassis suitable for carrying one or more mop buckets and ancillary cleaning aids or products and in which the task comprises floor mopping.

12. An appliance as claimed in any of claims 1 to 10 wherein the appliance comprises a vacuum cleaner or a floor scrubber or a combination of the two

13. A trolley or appliance as claimed in any preceding claim wherein the first and second sets or wheels or rollers are arranged so that the trolley or appliance must be tipped by an angle of about 5³ or more to transfer the load from the first set of wheels or rollers to the second set.
